# EUROPEAN PATENT SPECIFICATION

(11) **EP 0 583 471 B1**
(45) Date of publication and mention of the grant of the patent: **17.09.1997**
(21) Application number: 92905797.4
(22) Date of filing: 05.03.1992
(51) Int. Cl.: C09J 4/02, C09J 4/00

(54) **PHOTOPOLYMERIZABLE ADHESIVE**
PHOTOPOLYMERISIERBARER KLEBSTOFF
ADHESIF PHOTOPOLYMERISABLE

(43) Date of publication of application: 23.02.1994
(73) Proprietor: JAPAN INSTITUTE OF ADVANCED DENTISTRY, Tokyo 101 (JP)
(72) Inventor: MASUHARA, Eiichi 5-11, Honkomagome 2-chome, Tokyo 113 (JP); KOMIYA, Shigeo 7-10, Minamiurawa 3-chome, Saitama-ken 336 (JP); SAWAMOTO, Takeyuki 2-11, Kamiogi 3-chome, Tokyo 167 (JP); OGURO, Satoko 9-5, Sagamihara 8-chome, Kanagawa-ken 229 (JP)
(74) Representative: Woods, Geoffrey Corlett
(86) International application number: JP9200263
(87) International publication number: WO9318104

(56) References cited:
- EP-A- 0 287 516
- JP-A- 2 060 981
- JP-A- 2 110 178
- JP-A- 2 252 775
- JP-A-62 149 774
- Week 8434, Derwent Publications Ltd., London, GB; AN 84-210532 & JP-A-59 122 567 (MATSUSHITA ELEC IND)
- Week 8434, Derwent Publications Ltd., London, GB; AN 84-210532 & JP-A-59 122 567

## Description

This invention relates to a photopolymerizable adhesive which polymerizes and exhibits excellent adhesive properties when irradiated by ultraviolet (UV) or visible light, and, more specifically, to a photopolymerizable adhesive having excellent transparency to ultraviolet light and which furthermore has excellent ultraviolet resistance and weather resistance without any physical degradation such as lowering of the transparency due to colouring or discolouration and cracks when exposed to sunlight and ultraviolet light for a long time.

Recently, due to their practically useful adhesive properties which the adhesive develops when polymerized for a few seconds or minutes by irradiation of ultraviolet or visible light, photopolymerizable adhesives are used widely in fields such as glass processing, electronics and optoelectronics instead of thermocurable adhesives or solvent dilution adhesives, such as epoxy, acrylic and synthetic rubber adhesives, which were previously used.

Conventionally, these photopolymerizable adhesives consist of photopolymerizable monomers and a photopolymerizing initiator additive.

The above photopolymerizable monomers are generally obtained by mixing polyfunctional (meth)acrylates having a relatively high molecular weight and viscosity such as bisphenolamodifiedepoxy(meth)acrylate, urethane-modifieddi(meth)acrylate and polyester-modifieddi(meth)acrylate, and radical-polymerizable monomers having a relatively low molecular weight and viscosity such as hydroxyethyl(meth)acrylate, cyclohexyl(meth)acrylate, isodecyl(meth)acrylate, dimethylaminoethyl(meth)acrylate, N- vinylpyrrolidone and N,N-dimethylacrylamido.

The photopolymerizable initiators are usually, for example, benzoin, benzoinalkylether, benzophenone, derivatives of benzophenone, benzyl, thioxanthones, acetophenones and Michler's ketone.

However, these conventional photopolymerizable adhesives have disadvantages in that they generally have a low transparency to ultraviolet light having a wavelength of 400 nm or less. Accordingly, it is disadvantageous to use these adhesives in an optical system of optical instruments using ultraviolet light from, for example, a high-pressure mercury lamp, metal halide lamp and mercury xenon lamp in order to bond, for example, a lens, prism, beam-splitter or window of a detector. This is because the loss of photo-energy is too much, such that the photo-energy from ultraviolet light sources cannot be effectively utilized.

Furthermore, these conventional photopolymerizable adhesives also have undesirable properties in that they often discolour to yellow or brown, lower in transparency, and have defects such as fissures and cracks caused by deterioration when exposed to strong ultraviolet light after polymerization.

Therefore, they cannot be practically used for ultraviolet optical systems, per se, for bonding construction in identifying windows and reverberatory boards of an ultraviolet exposure device, or for protection covers for ultraviolet lamps, because they lack ultraviolet resistance.

Furthermore, the conventional photopolymerizable adhesives cannot be practically used for the glass of windows or showcases used for out-door exhibition which are directly exposed to sunlight, due to their disadvantage with respect to weather resistance. They discolour to yellow or cause cracks when exposed to sunlight after polymerization for a few months.

It is generally thought that colouring-discolouring or mechanical deterioration such as cracks of a resin composition such as an adhesive, when it is irradiated by ultraviolet light or exposed to sunlight, is caused by a photochemical reaction such as oxidation or decomposition of ingredients of the resin composition, which occurs on absorption of light such as ultraviolet light.

An attempt has been made to prevent the colouring or discolouring of the photopolymerizable resins such as a photopolymerizable adhesive by using specific compounds having no phenyl ring as the photopolymerizable monomers, or by using specific compounds as the photopolymerizing initiator.

Another attempt has been also made to improve the ultraviolet or sunlight resistance of the photopolymerizable resins by addition of ultraviolet light absorbers such as the derivatives of benzotriazol or benzophenone to the photopolymerizable adhesive. However those attempts were made with respect to the main photochemical reaction of the photopolymerizable monomers, photopolymerizable adhesives or ultraviolet light absorbers. Nobody paid attention to the photochemical reaction between photopolymerizable monomers and ultraviolet light absorbers, or to the products formed by side reactions other than the polymerization between the photopolymerizable monomers and photopolymerizing initiator. Furthermore, when ultraviolet light absorbers were added, the ultraviolet transparency of the adhesive would hardly remain after bonding.

EP-A-287,516 discloses a composition comprising:
(a) a (meth)acrylate oligomer,
(b) a (meth)acrylate monomer,
(c) a flexibilizer (d) a silane coupling agent,
(e) an α-aminoacetophenone derivative as a photoinitiator, and
(f) a thioxanthone derivative as a photosensitizer.

The present invention seeks to overcome these problems inherent in conventional photopolymerizable adhesives. It seeks to provide a photopolymerizable adhesive having excellent transparency and ultraviolet resistance such that it can be used for bonding of an ultraviolet optical instrument or an ultraviolet device whose light source is, for example, a high-pressure mercury lamp or a metal halide lamp. The invention also seeks to provide a photopolymerizable adhesive having excellent weather resistance without causing any colouring, discolouring or physical deterioration such as cracks when it is exposed to sunlight for a long period such as a few months.

The term "ultraviolet light" in this invention means light having a wavelength of from about 300nm to about 400nm. Therefore, any light having a wavelength shorter than the above range, i.e. deep ultraviolet and far ultraviolet light, is not included in the term "ultraviolet light".

The term "visible light" in this invention means light having a wavelength of from about 400nm to about 800nm.

The present invention provides a photopolymerizable adhesive consisting essentially of:
at least one compound (1) which consists of at least one vinyl group and/or (meth)acryloxy group as a polymerizable group in its molecular chain, and other molecular structural moieties constructed from saturated hydrocarbons, saturated hydrocarbon ethers, dialkylsiloxanes, and derivatives thereof which can optionally be substituted by fluorine atoms, hydroxy groups or alkoxy groups;
3 to 60 wt% of at least one compound (2) selected from the following group A; and
0.1 to 2 wt% of at least one compound (3) selected from the following group B:
   group A: (meth)acrylic acid, hydroxyalkyl(meth)acrylate, (meth)acryloxyalkylsuccinic acid, trialkoxyvinylsilane, γ-(meth)acryloxyalkyltrialkoxysilane;
   group B: hydroxyacetophenones, acetophenoes, glyoxyesters, camphorquinones.

   The compound (1) may include alkanedioldi(meth)acrylates, cycloalkanedioldi(meth)acrylates, alkyleneglycoldi(meth)acrylates, glyceroldi(meth)acrylates, trimethylolpropane-modifieddi(meth)acrylates, pentaerythrytolpoly (meth)acrylates, bis[(meth)acryloxyalkyl]dimethylsiloxanes, bis[(meth)acryloxyalkyl]fluoroalkylsiloxanes, bis[(meth)acryloxyalkyl]fluoroalkanes, alkyl(meth)acrylates, alkyleneglycol(meth)acrylates, glycidyl(meth)acrylates, fluoroalkyl(meth)acrylates, fluoroalkyloxyalkyleneglycol (meth)acrylates, fluoroalkyloxyhydroxypropyl(meth)acrylates, siloxanyl(meth)acrylates, fluoroalkylsiloxanyl(meth)acrylates and hydroxyalkyl(meth)acrylates.

Examples of the compound (1) are as follows:

The alkanedioldi(meth)acrylates may be 1,4-butanedioldi(meth)acrylate, 1,6-hexanedioldi(meth)acrylate, 1,3-butyleneglycoldi(meth)acrylate, tetradecanedioldi(meth)acrylate, pentadecanedioldi(meth)acrylate, higher fatty acid di(meth)acrylate, and neo-pentylglycoldi(meth)acrlate. The cycloalkanedioldi(meth)acrylates may be bis(meth)acryloxymethyltricyclo[5, 2, 1, 0^{2,6}]decane, methoxylatedcyclohexyldi(meth)acrylate, hydrogenelatedbisphenol-A di(meth)acrylate, bis[γ-(meth)acryloxyethyloxycyclohexyl]propane, bis[γ-(meth)acryloxy-2-hydroxypropylcyclohexyl]propane. The alkyleneglycoldi(meth)acrylates may be ethyleneglycoldi (meth)acrylate, diethyleneglycoldi(meth)acrylate, triethyleneglycoldi(meth)acrylate, tetraethyleneglycoldi(meth)acrylate, polyethyleneglycoldi(meth)acrylate, propyleneglycoldi(meth)acrylate, dipropyleneglycoldi(meth)acrylate, tripropyleneglycoldi(meth)acrylate, tetrapropyleneglycoldi(meth)acrylate and polypropyleneglycoldi(meth)acrylate. The trimethylolpropane-modifieddi(meth)acrylates may be trimethlolpropanetri(meth)acrylate, ethyleneoxide-modifiedtrimethylolpropanetri(meth)acrylate, propyleneoxide-modifiedtrimethylolpropanetri(meth)acrylate, neo-pentylglycol-modifiedtrimethylolpropanedi(meth)acrylate and epichlorohydrine-modifiedtrimethylolpropanetri(meth)acrylate.

The glyceroldi(meth)acrylates may be glyceroldi(meth)acrylate, epichlorohydrine-modifiedethyleneglycoldi(meth)acrylate, epichlorohydrine-modifiedpropyleneglycoldi(meth)acrylate, triglyceroldi(meth)acrylate and epichlorohydrine-modified1, 6-hexanedioldi(meth)acrylate.

The pentaerythritolpoly(meth)acrylates may be pentaerythritoltri(meth)acrylate, pentaerythritoltetra (meth)acrylate, dipentaerythritolhexa (meth)acrylate, dipentaerythritolmonohydroxypenta (meth)acrylate, alkyl-modifieddipentaerythritolpenta (meth)acrylate, alkyl-modifieddipentaerythritoltetra(meth)acrylate and alkyl-modifieddipentaerythritoltri(meth)acrylate.

The bis[(meth)acryloxyalkyl] dimethylcyclohexanes, bis[(meth)acryloxyalkyl]fluoroalkylsiloxanes and bis[(meth)acryloxyalkyl]fluroalkanes may be the compounds having the following formulae (1) to (3); 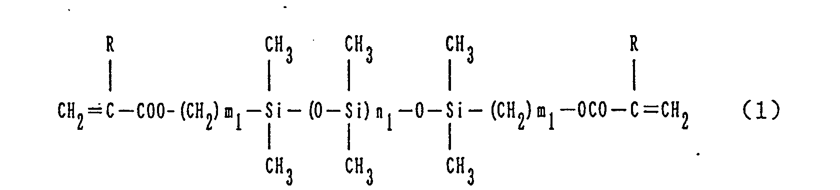 wherein R is hydrogen or methyl, m₁ is 2 to 4 and n₁ is 0 to 60. 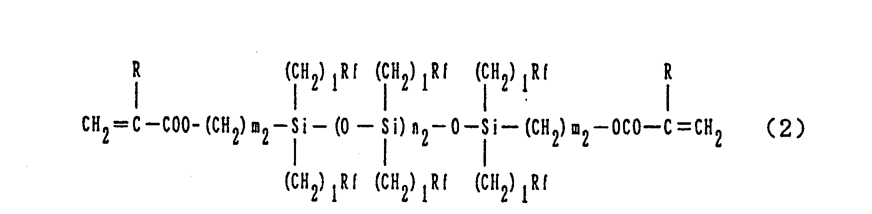 wherein R is hydrogen or methyl, Rf is perfluoroalkyl, l is 1 to 4, m₂ is 2 to 4, n₂ is 0 to 60. 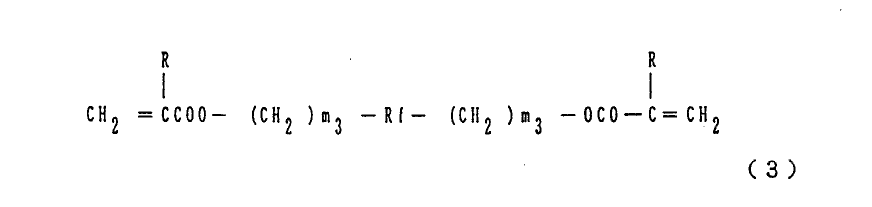 wherein R is hydrogen or methyl, Rf is perfluoroalkyl, m₃ is 1 to 4.

The alkyl(meth)acrylates, alkyleneglycol(meth)acrylates and glycidil(meth)acrylates may be methyl(meth)acrylate, ethyl(meth)acrylate, n-propyl(meth)acrylate, n-butyl(meth)acrylate, n-hexyl(meth)acrylate, octyl(meth)acrylate, lauryl(meth)acrylate, stearyl(meth)acrylate, isopropyl(meth)acrylate, isobutyl(meth)acrylate, iso-octyl(meth)acrylate, isodecyl(meth) arylate, cyclohexyl(meth)acrylate, 4-tert. - butylcyclohexyl(meth)acrylate, isoborlnyl(meth)acrylate, (meth)acrylic acid tricyclo [5, 2, 1, 0^{2,6}] decane, 2-methoxyethyl(meth)acrylate, methoxydiethleneglycol (meth)acrylate, methoxytriethyleneglycol (meth)acrylate, methoxypolyethyleneglycol (meth)acrylate, methoxydipropyleneglycol (meth)acrylate, methoxypolypropyleneglycol(meth)acrylate, 2-ethoxyethyl(meth)acrylate, 2(2-ethoxyethyl) ethyl(meth)acrylate, butoxyethyl(meth)acrylate, butoxyethyleneglycol(meth)acrylate, polyethyleneglycol(meth)acrylate, polypropyleneglycol(meth)acrylate, glycidil(meth)acrylate and glycerol(meth)acrylate.

The fluoroalkyl(meth)acrylates, fluoroalkyloxyaklyleneglycol(meth)acrylates and fluoroalkyloxyhydroxypropyl(meth)acrylates may be the compounds having the following formulae (4) to (7); 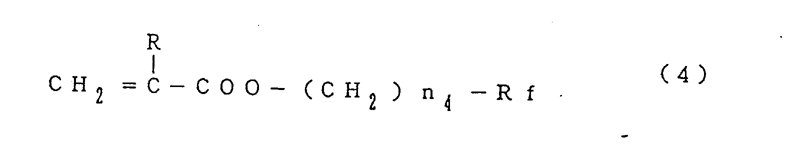 wherein R is hydrogen or methyl, Rf is perfluoroalkyl and n₄ is 1 to 4. 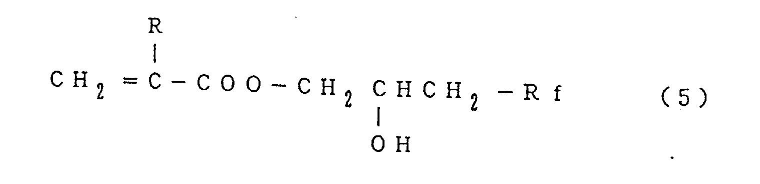 wherein R is hydrogen or methyl and Rf is perfluoroalkyl. 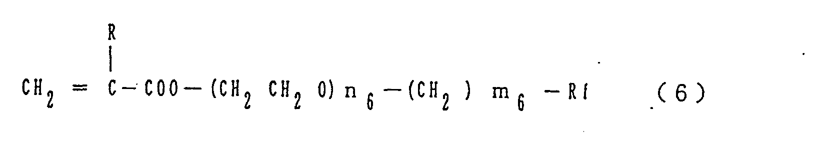 wherein R is hydrogen or methyl, Rf is perfluoroalkyl, n₆ is 1 to 20 and m₆ is 1 to 4. 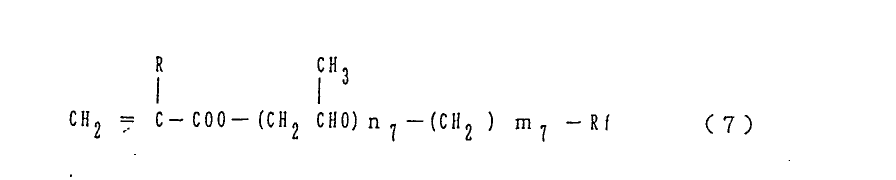 wherein R is hydrogen or methyl, Rf is perfluoroalkyl, n₇ is 1 to 20 and m₇ is 1 to 4.

The siloxanyl(meth)acrylates and fluoroalkylsiloxanyl(meth)acrylates may be the compounds having the following formulae (8) to (10); 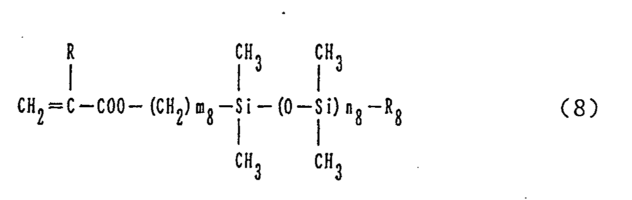 wherein R and R₈ are independently hydrogen or methyl, m₈ is 1 to 4 and n₈ is 0 to 20. 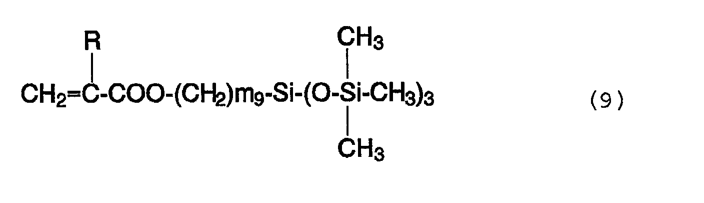 wherein R is hydrogen or methyl and m₉ is 3 to 4. 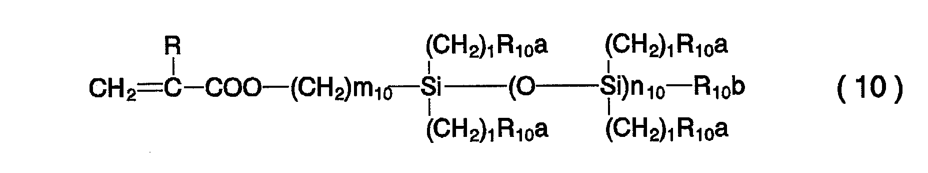 wherein R is hydrogen or methyl, R₁₀ₐ and R_{10b} are independently hydrogen, alkyl or perfluoroalkyl, 1 is 1 to 4, m₁₀ is 2 to 4 and n₁₀ is 1 to 60.

The compound (1), the first essential ingredient of the adhesive, improves the ultraviolet transparency, ultraviolet resistance and weather resistance of the adhesive.

Furthermore, all the compounds (1) have the following characteristics in common:

All the compounds (1) have no conjugated structure in their molecules, such as aromatic rings, hetero rings, dienes and diketones excepting the (meth)acryloxy group, and have no ester bond nor carbonate bond excepting the (meth)acryloxy group. They furthermore only contain carbon, oxygen, hydrogen, fluorine and silicon atoms.

The compounds (1), whose molecular extinction coefficient is 100 or lower, have a very low absorbancy of ultraviolet rays at a wavelength of 250nm or more and visible light.

Conventional photopolymerizable adhesives such as bisphenol-A-modified di(meth)acrylate, urethane-modified di(meth)acrylate and polyester-modified(meth)acrylate do not have the above-mentioned characteristics.

The compound (1) is preferably used in an amount of 40 to 97 wt% of the adhesive to develop a good balance between bonding strength and water resistance; more preferably it is used in an amount of 70 to 90 wt%.

An especially preferable use of the compound (1) is to select and mix compounds (1) such that the mixture of compounds (1) contains 10 to 50 wt% of compounds which have two or more (meth)acryloxy groups; such as alkanedioldi(meth)acrylates, cycloalkanedioldi(meth)acrylates and alkyleneglycoldi(meth)acrylates and 50 to 90 wt% of the compounds which have one or more (meth)acryloxy groups; such as alkyl(meth)acrylates and fluoroalkyl(meth)acrylates. The balance between photopolymerizable and adhesive properties of the adhesive will then be improved.

Examples of the compound (2) are (meth)acrylic acids, hydroxyalkyl(meth)acrylates and (meth)acryloxyalkylsuccinic acids such as (meth)acrylic acid, (meth)acryloxyethylsuccinic acid, (meth)acryloxypropylsuccinic acid, (meth)acryloxybutylsuccinic acid, 2-hydroxyethyl(meth)acrylate, 2-hydroxypropyl(meth)acrylate, butanediolmono (meth)acrylate, polyethyleneglycolmono(meth)acrylate, polypropyleneglycolmono (meth)acrylate, polyethyleneglycol/polypropyleneglycolmono (meth)acrylate.

Examples of trialkoxyvinylsilanes and γ-(meth)acryloxyalkyltrialkoxysilanes are compounds having the following formulae (11) and (12). 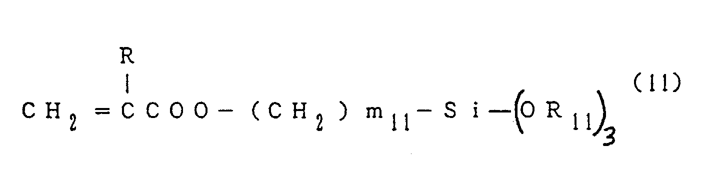 wherein R is hydrogen or methyl, R₁₁ is alkyl and m₁₁ is 3 to 4.

CH₂=CH-Si-(OR₁₂)_{₃} (12)

wherein R₁₂ is alkyl.

The compound (2), the second essential ingredient of the adhesive, provides an excellent adhesive property.

All the compounds (2) have the following characteristics in common:

The compounds (2), as well as the compounds (1), have no conjugated structure in their molecules such as aromatic rings, hetero rings, dienes or diketones excepting the (meth)acryloxy and vinyl groups capable of being polymerized, and have no ester bond nor carbonate bond excepting the (meth)acryloxy groups.

The furthermore have no nitrogen or halogen atoms.

The compounds (2), as well as the compounds (1), have a very low absorbancy so that their molecular extinction coefficient is 100 or less for ultraviolet rays having a wavelength of 250nm or more and visible light.

The quantity of the compound (2) used in this invention is not less than 3 wt%. If the quantity is less than 3 wt%, the adhesive property of the adhesive declines so that it can no longer be used as an adhesive.

The hydroxyalkyl(meth)acrylates may be used simultaneously not only as the compound (1) but also as the compound (2). In this case, if the total quantity of the same compound is 3 wt% or more in the photopolymerizable adhesive, it will be always within the scope of this invention. The quantity of the compound (2) used in this invention is 60 wt% or less in order to obtain excellent water resistance after bonding. It is preferably 10 to 30 wt%.

Examples of the compound (3) are hydroxyacetophenones such as 1-phenyl-2-hydroxy-2-methyl propane-1-one, 1-(3,4-dimethylphenyl)-2-hydroxy-2-methylpropane-1-one, 1-(4-isopropylphenyl)-2-hydroxy-2-methylpropane-1-one, 1-(4-tert.butylphenyl)-2-hydroxy-2-methylpropane-1-one, 4-(2-hydroxyethoxyphenyl)-2-hydroxy-2-methylpropane-1-one and 1-hydroxycyclohexylphenylketone.

Examples of acetophenones are diethoxyacetophenone and p-tert.butyltrichloroacetophenone.

An example of a glyoxyester is an alkylphenylglyoxylate.

Examples of camphorquinones are camphorquinone and a camphorquinone derivative. Any compound (3) defined in this invention is a photopolymerizing initiator which generates free radicals when irradiated with light such as ultraviolet and/or visible light, and confers an excellent photopolymerization property on the adhesive.

The compounds (3) have the following properties;
1. All of the hydroxyacetophenones, acetophenones and glyoxyesters absorb light having a wavelength of 300nm or more, i.e. near ultraviolet range. Such initiators are cleavage type initiators, which generate radicals on cleavage when irradiated by light having the above-mentioned wavelength. Absorbancy of ultraviolet rays having the same wavelength declines after cleavage.
2. Camphorquinones progress the photopolymerization by hydrogen abstraction from their own molecules or from the compounds around them when they are irradiated. Therefore, they are called hydrogen abstraction type initiators. There is no cleavage of the molecular structure of the initiator. As the photopolymerization initiators themselves do not have structures such as aromatic rings or hetero rings which have a tendency to be coloured, the initiators will become colourless when the conjugated structure of a diketone is destroyed by hydrogen abstraction.
3. None of the compounds (3) produces coloured products such as a benzyl radical and benzenoide when decomposed by irradiation.

The quantity of the compound (3) used in this invention is 0.1 to 2 wt% of the photopolymerizable adhesive. If the quantity used is less than the lower limit, the photopolymerizable property declines so that the composition is not polymerized adequately by light irradiation, and the composition is not a practically useful adhesive. On the other hand, if the quantity used is greater than the upper limit, the transparency to ultraviolet light is lost by the absorption caused by the excess amount of the compound (3) which is unreacted and remained in the adhesive, so that the objects of this invention are not attained.

The adhesive of the present invention develops excellent bonding properties on polymerization when it is irradiated by light, and excellent transparency to ultraviolet and visible light after bonding, without causing discolouring or deterioration such as cracks by being exposed to ultraviolet light or sunlight for a long term. However, these characteristics are obtained only by using the compounds (1) and (2) which have the specific structures above and the compound (3) as a photopolymerizing initiator which has the specific structure above in a specific proportion.

The compounds (1) and (2) have excellent transparency to ultraviolet rays having a wavelength of 250nm or more and visible light. However, when the compounds (1) and (2) are polymerized by using a photopolymerizing initiator such as benzophenone or thioxantone, which have been used in the prior art, the transparency of the cured adhesive in the range of ultraviolet light is markably lost, so that the objects of this invention cannot be attained.

A photochemical reaction product having a small absorbancy of ultraviolet rays and visible light can be obtained by polymerization of the compound (3) alone. On the other hand, if the compound (3) is photopolymerized with, for example, bisphenol-A-modified di(meth)acrylate or urethane-modified di(meth)acrylate usually used in the prior photopolymerizable adhesives, the objects of this invention are not be attained due to the poor transparency of the polymerized adhesive and the poor ultraviolet or weather resistance after bonding.

These suggest that the ultraviolet transparency, ultraviolet resistance and weather resistance of the photopolymerizable adhesive after bonding do not depend upon the individual properties of the photopolymerizable monomer such as the compound (1) or (2), and of the compound (3) used as a photopolymerizing initiator.

Thus, photopolymerizable adhesives which have a good ultraviolet transparency, and an excellent ultraviolet and weather resistance at the same time are not obtained by using each of the compounds (1), (2) and (3) separately in conventional photopolymerizable adhesives.

The desired objects of this invention are attained only by using the compounds (1) and (2) with the compound (3) as a photopolymerizing initiator in a specific proportion. The compounds (1) and (2) are polymerized into a polymer having a high molecular weight. They have no conjugated structure such as aromatic rings, hetero rings, dienes and diketones. They have no ester bonds nor carbonate bonds excepting the bonds directly bonded to the (meth)acryloxy groups or vinyl groups. They have no bond which has a low uniform or non-uniform dissociation energy, such as the direct bonds between carbon and nitrogen, sulfur, phosphor, chlorine, bromine or iodine. As even the unsaturated bonds between carbon and carbon of vinyl groups or (meth)acryloxy groups vanish after photopolymerization, the resulting polymers are photochemically very stable.

As the compounds (1) and (2) have a photochemically stable structure, the photochemical reaction between them and the photopolymerizing initiator produces very little product other than that which is involved in photopolymerization.

No compound which has strong absorption of ultraviolet and visible light is obtained by the photochemical reaction of the compound (3) per se. As it may be used in a limited amount, the transparency of the adhesive to ultraviolet and visible light is not deteriorated.

Accordingly, in the photopolymerizable adhesives of this invention photochemical reaction products which have high photochemical reactivity with ultraviolet and visible light are not be produced after photopolymerization. The absorbancy at these wavelengths of the photopolymerized adhesives is very small.

Small quantities of other ingredients may also optionally be added without losing any advantage of this invention. These other ingredients may for example be a polymer such as polyalkyl(meth)acrylate, which is dissolved in an amount of 5 wt% or less and has moderate viscosity.

It is preferred that the structure of the optional polymer dissolved in the adhesives is similar to that of compounds (1) and (2). It is preferred not to use, for example, polymers which contain a phenyl ring such as polystyrene or polycarbonate, or a conjugated structure such as liquid or powder polybutadiene or polyisoprene.

Other optional ingredients may for example be organic peroxides having no phenyl ring. Examples of the organic peroxides are succinic acid peroxide, tert.- butylhydroperoxide, lauroylperoxide and di-tert.-butylperoxide. In addition to the photopolymerizable property, a heatpolymerizable property will be provided by using such organic peroxides as the other ingredients. Therefore, the application field of the photopolymerizable adhesives of this invention will be extended for example by applying them to a position which can not be irradiated by light, but cured by heat treatment.

Other ingredients optionally added in a small quantity to the photopolymerizable adhesive of this invention are monomers which may improve the adhesive properties without deteriorating the performance of the adhesives.

Examples are aliphatic phosphoric acid (meth)acrylates having the following formulae (13) to (15).
They are used in an amount of 1 wt% or less. 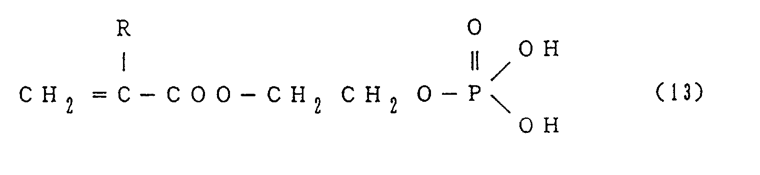 wherein R is hydrogen or methyl. 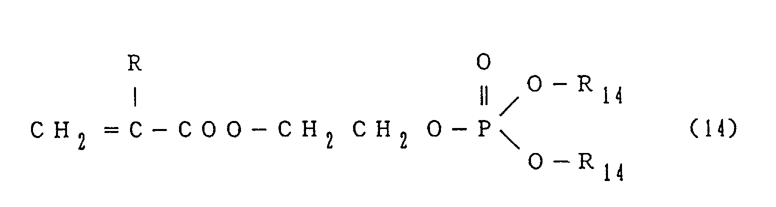 wherein R is hydrogen or methyl, R₁₄ is alkyl group. 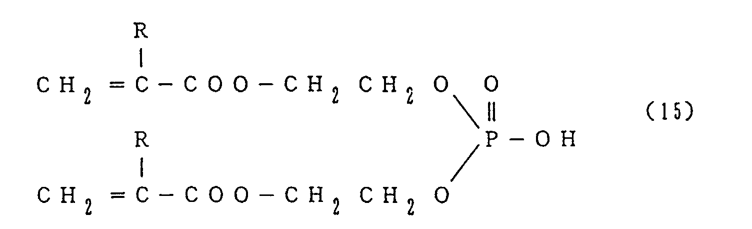 wherein R is hydrogen or methyl.

The invention is now further described in more detail in the following Examples.

### Example 1

A photopolymerizable adhesive according to this invention comprising 18 wt% of triethyleneglycoldi(meth)acrylate and 56 wt% of γ-methacryloxytricyclo[5, 2, 1, 0^{2,6}]decane as the compound (1), 20 wt% of 2-hydroxyethylmethacrylate and 5. 5 wt% of triethoxyvinylsilane as the compound (2), and 0. 5 wt% of 1-hydroxycyclohexylphenylketone was prepared. This adhesive was applied on a colourless, transparent glass plate having a good transparency to ultraviolet light having a wavelength of 300nm or more and visible light. Another glass plate, which was made of the same material, was laid on the above plate.

This adhesive was then irradiated for a period of 10 minutes with ultraviolet light from a 400W high-pressure mercury lamp which had 8mW/cm² irradiation intensity at a wavelength of 360nm.

The two plates of glass were found to be colourless, transparent and firmly bonded together. No discolouring to yellow or brown was observed. The transmittance of the resulting glass plates bonded as described above was measured using a spectrophotometer. This sample had good transparency at a wavelength of 300nm or more, and its transmittance was 87% at a wavelength of 360nm, and 91% at a wavelength of 400nm.

Next, an ultraviolet resistance test of the same sample was carried out by irradiating the sample for 200 hours with a metal halide lamp whose irradiation intensity was 30mW/cm² at a wavelength of 360nm.

After the 200 hours irradiation test, there was no change of the appearance of the sample, such as discolouring, cracks and peeling. The transmittances at wavelengths of 360nm and 400nm were 89% and 90%, respectively, thus confirming that it had excellent ultraviolet resistance.

Next, other glass plates prepared according to the above bonding process by using the photopolymerizable adhesive of this invention were kept outdoors for six months. Thus they were irradiated by sunlight and a weather resistance test was carried out. After the test, the glass plates were colourless and transparent and had no change in appearance, as they were after the ultraviolet resistance test. The transmittances at a wavelengths of 360nm and 400nm were 88% and 90%, respectively, thus confirming that they had excellent weather resistance.

### Examples 2 to 8

By using the compounds (1), (2) and (3), photopolymerizable adhesives which had various kinds and quantities of said compounds in the range defined by this invention were prepared. The samples were prepared by bonding glass plates with said adhesives according to Example 1. The bonding properties, transmittance of ultraviolet light, ultraviolet resistance and weather resistance were evaluated.

Table 1 shows the compositions of the photopolymerizable adhesives of each Example and the results of each test.

As shown Table 1, the photopolymerizable adhesives of this invention showed not only good bonding properties but also excellent transmittance and ultraviolet resistance. Furthermore, good performance was observed in a weather resistance test carried out by exposure outdoors for six months.

### Comparative Example 1

A photopolymerizable adhesive was prepared according to Example 1 except by using 74wt% of bis[4-acryloxy-2-hydroxypropylphenyl]propane, which has been used as a main ingredient of prior photopolymerizable adhesives, instead of compound (1). By using this adhesive to bond glass plates, as set out in Example 1, excellent bonding properties were observed. Measurement of the transmittance of the resulting samples showed 80% at a wavelength of 360nm, and 88% at a wavelength of 400nm.

Next, irradiation of ultraviolet light from a metal halide lamp for 200 hours was carried out according to Example 1. There were no cracks and peeling, but yellow discolouring of sample was observed.

Measurement with a spectrophotometer of the transmittance of the samples after irradiation for 200 hours showed 58% at a wavelength of 360nm and 82% at a wavelength of 400nm.

Thus, the remarkable change in transmittance was caused by ultraviolet light irradiation.

Furthermore, the glass plate samples were exposed outdoors for six months in this Comparative Example 1. The adhesive had yellow discolouring, and the appearance was remarkably deteriorated.

### Comparative Examples 2 to 4

Photopolymerizable adhesives comprising, as photopolymerizable monomers or photopolymerizing initiators, compounds other than those used in this invention were prepared according to Comparative Example 1. Two pieces of the glass plates were bonded by these adhesives, and the bonding properties, transmittance of ultraviolet light, ultraviolet resistance and weather resistance were evaluated. Table 2 shows the composition of the photopolymerizable adhesives, and the results of performance tests of each sample.

As shown by the results in Table 2, the photopolymerizable adhesives of these Comparative Examples could not simultaneously obtain good transmittance of ultraviolet light, good ultraviolet resistance and weather resistance, and were inferior to the photopolymerizable adhesives of this invention.

### Comparative Example 5

By changing the quantities of the compounds (1) and (2) used in Example 1, a photopolymerizable adhesive in which the quantity of the compound (2) is less than the lower limit of the range of this invention was prepared. Namely, the composition,contained 42 wt% of triethyleneglycoldi(meth)acrylate, 56 wt% of γ-methacryloxytricyclo[5, 2, 1, 0^{2,6}]decane, 1 wt% of hydroxyethyl(meth)acrylate, 0.5 wt% of triethoxyvinylsilane and 0. 5 wt% of 1-hydroxycyclohexylphenylketone.

The resulting photopolymerizable adhesive of this Comparative Example was used to bond the glass plates as set out in Example 1. After the photopolymerization, the glass plates were easily peeled off from each other by only a slight peeling force, thus confirming that the adhesive did not have good adhesive properties.

### Comparative Example 6

A photopolymerizable adhesive was prepared according to Example 1, excepting that the quantity of 1-hydroxycyclohexylphenylketone, used as the compound (3) in Example 1, was 5 wt%, which is out of the range defined by this invention, and that the quantity of 2-hydroxyethylmethacrylate used as the compound (2) was 15. 5 wt%.

Using this adhesive for the bonding of glass plates as set out in Example 1, colourless and transparent strong bonding samples were obtained.

However, the transmittance of this sample was less than 60% at a wavelength of 360nm as measured by a spectrophotometer, thus confirming that it did not have good ultraviolet transmittance.

The photopolymerizable adhesive of this invention has been shown to have not only good bonding properties, but also excellent ultraviolet transmittance, ultraviolet resistance and weather resistance. Therefore, it is possible to carry out a simple bonding process by using the photopolymerizable adhesive of this invention in various applications, such as the construction of optical systems of ultraviolet-exposure devices used in making a semiconductor, an adhesive bonding of a filter or a window used in optical systems of fiber-light source of ultraviolet, and the making of glass showcases used for outdoor display.

The terms used in Tables 1 and 2 have the following meanings:
*1: The appearance of the samples prepared by bonding together glass plates having a thickness of 1 mm is visually observed. The results obtained are evaluated by the following standards.
   A: Samples which had no discolouration to yellow, reddish brown, brown or other colours, and had no fissures, cracks or other physical defects.
   B: Samples which had no physical defects such as fissures and cracks, but which had discolouration to yellow or brown.
   C: Samples which had strong discolouration to reddish brown or brown, or had physical defects such as fissures and cracks.
*2: The bonding properties are evaluated by the following standards with respect to the conditions when the bonded glass plates are subjected to a peeling force by fingers.
   A: Samples which were not separated by even a fair peeling force.
   B: Samples which were separated by an intermediate peeling force.
   C: Samples which were easily separated by a slight peeling force.
*3: The transmittances of light are measured by a spectrophotometer at wavelengths of 360nm and 400nm, on the samples which had been made by bonding glass plates having a thickness of 1 mm together.
*4: The ultraviolet resistance is evaluated by measuring the light transmittance of the samples which are made by bonding glass plates having a thickness of 1 mm together, after continuous irradiation of ultraviolet light at an irradiation intensity of 30 mW/cm² at a wavelength of 360nm from a metal halide lamp for 200 hours.
*5: The weather resistance is evaluated by appearance and light transmittance of the samples which are made by bonding glass plates having a thickness of 1 mm together, after keeping outdoors and directly exposing the sample to the sunlight for six months.

The symbols used in Tables 1 and 2 designate the following compounds;
DCPA: bis[4-acryloxyethyl]tricyclo[5,2,1,0^{2,6}]decane
TCDM: 4-methacryloxytricyclo [5, 2, 1, 0^{2,6}] decane
6FMA: 1, 1, 2, 2-tetrahydro-fluorooctylmethacrylate
TGMA: trigylceroldimethacrylate
IBMA: isobornylmethacrylate
BMA: n-butylmethacrylate
OSMA: bis[methacryloxypropyl]oligodimethylsiloxane
TCDA: 4-acryloxytricyclo[5, 2, 1, 0^{2,6}]decane
TEGMA: triethyleneglycoldimethacrylate
HDM: 1,6-hexanedioldimethacrylate
PETMA: pentaerythritoltrimethacrylate
MPTMS: γ-methacryloxypropyltrimethoxysilane
PEGMA: polyethyleneglycoldimethacrylate
TMPTA: trimetylolpropanetrimethacrylate
HEMA: 2-hydroxyethylmethacrylate
TVSi: triethoxyvinylsilane
MA: methacrylic acid
SAMA: methacryloxyethylsuccinic acid
BDMA: 1,4-butanediolmonomethacrylate
HPA: hydroxypropylacrylate
UDMA: iso-phorondiisocyanate-modifieddimethacrylate
PEA: aliphatic polyesterdimethacrylate
DMEA: N, N-dimethylaminoethylmethacrylate
BGMA: bis[4-methacryloxy-2-hydroxypropyl-phenyl]propane
BEMA: bis[4-methacryloxyethyloxyphenyl]propane
HCPK: 1-hydroxycyclohexylphenylketone
HMPP: 1-phenyl-2-hydroxy-2-methylpropane-1-one
CQ: d, l-camphorquinone
LPO: lauloylperoxide
MPGO: methylphenylglyoxylate
DEAP: diethoxyacetophenone
BP: benzophenone
DMPT: N, N-dimethyl-p-toluidine

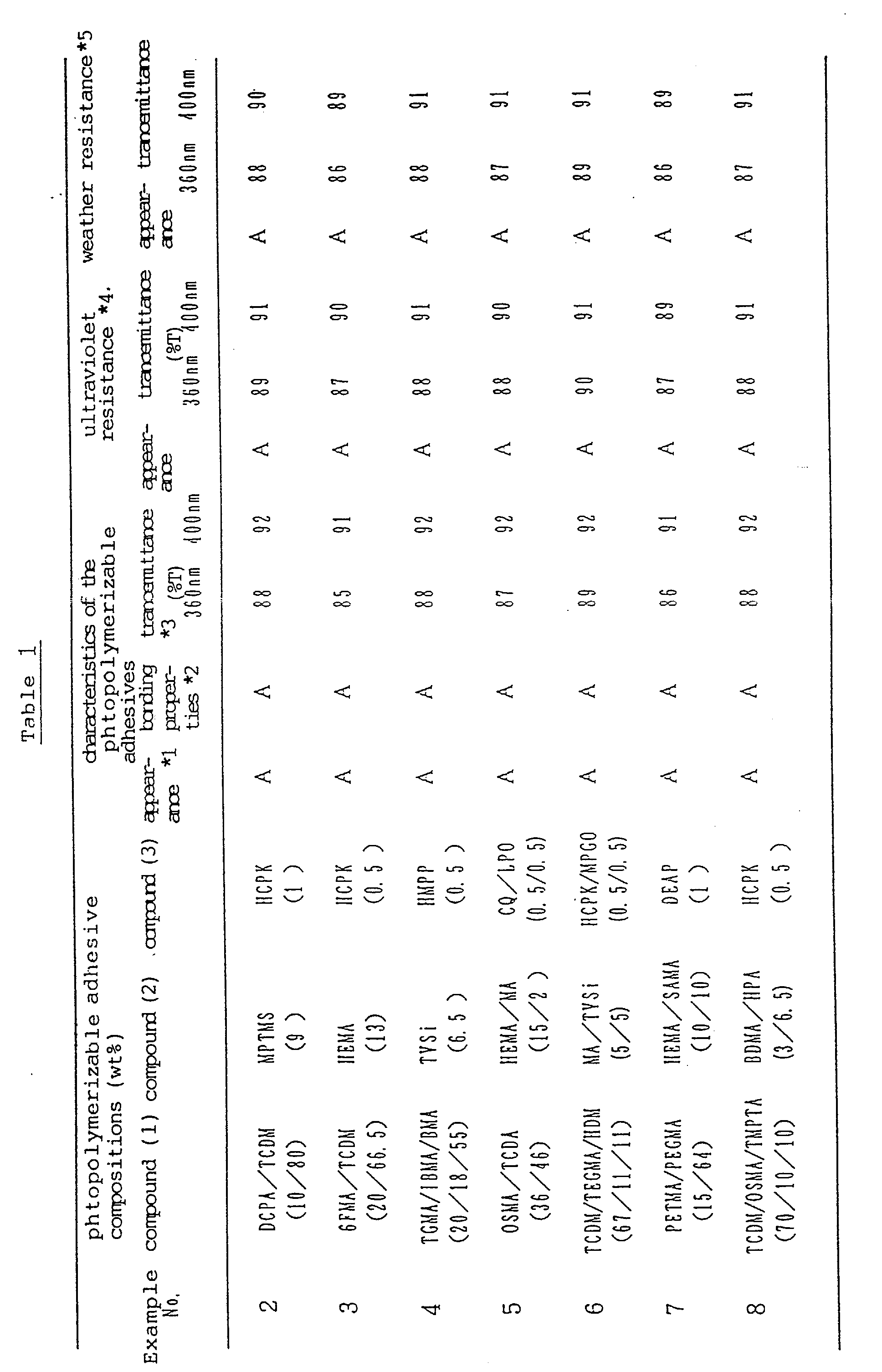

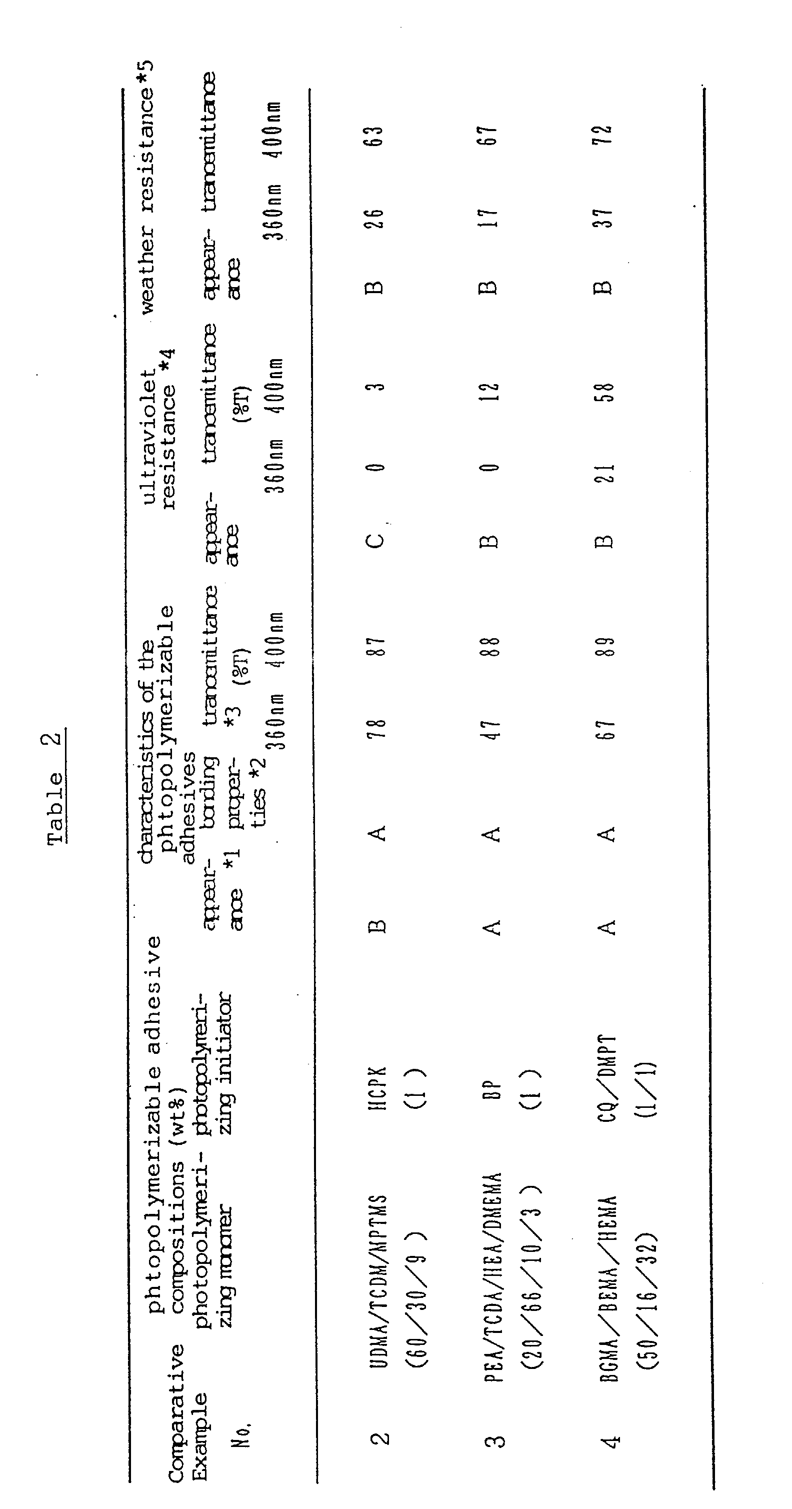

## Claims

1. A photopolymerizable adhesive consisting essentially of:
at least one compound (1) which consists of at least one vinyl group and/or (meth)acryloxy group as a polymerizable group in its molecule, and other molecular structural moieties constructed from saturated hydrocarbons, saturated hydrocarbon ethers, dialkylsiloxanes, and derivatives thereof which can optionally be substituted by fluorine atoms, hydroxy groups or alkoxy groups; 3 to 60 wt% of at least one compound (2) selected from the following group A; and 0.1 to 2 wt% of at least one compound (3) selected from the following group B:
group A: (meth)acrylic acid, hydroxyalkyl(meth)acrylate, (meth)acryloxyalkylsuccinic acid, trialkoxyvinylsilane and γ-(meth)acryloxyalkyltrialkoxysilane;
group B: hydroxyacetophenones, acetophenones, glyoxyesters and camphorquinones.

2. An adhesive according to claim 1 in which compound (2) is present in an amount of 10 to 30 wt%.

3. An adhesive according to claim 1 in which compound (1) is an alkanedioldi(meth)acrylate,
cycloalkanedioldi(meth)acrylate, alkyleneglycoldi(meth)-acrylate, glyceroldi(meth)acrylate,trimethylolpropane-modified di(meth)acrylate,
pentaerythrytolpoly(meth)acrylate,
bis[(meth)acryloxyalkyl]dimethylsiloxane,
bis[(meth)acryloxyalkyl]fluoroalkylsiloxane,
bis[(meth)acryloxyalkyl]fluoroalkanes, alkyl(meth)acrylate,
alkyleneglycol(meth)acrylate, glycidyl(meth)acrylate,
fluoroalkyl(meth)acrylate,
fluoroalkyloxyalkyleneglycol(meth)acrylate,
fluoroalkyloxyhydroxypropyl(meth)acrylate,
siloxanyl(meth)acrylate, fluoroalkylsiloxanyl(meth)acrylate or hydroxyalkyl(meth)acrylate.

4. An adhesive according to claim 1 in which the compound (1) is present in an amount of 70 to 90 wt%.

5. An adhesive according to claim 1 in which compound (2) is (meth)acrylic
acid, (meth)acryloxyethylsuccinic acid,
(meth)acryloxypropylsuccinic acid,
(meth)acryloxybutylsuccinic acid, 2-hydroxyethyl
(meth)acrylate, 2-hydroxypropyl(meth)acrylate,
butanediolmono(meth)acrylate,
polyethyleneglycolmono(meth)acrylate,
polypropyleneglycolmono(meth)acrylate, or
polyethyleneglycol/polypropyleneglycolmono(meth)acrylate.

6. An adhesive according to claim 1 in which compound (3) is 1-phenyl-2-hydroxy-2-methylpropane-1-one, 1-(3,4-dimethylphenyl)-2-hydroxy-2-methylpropane-1-one, 1-(4-isopropylphenyl)-2-hydroxy-2-methylpropane-1-one, 1-(4-tert.butylphenyl)-2-hydroxy-2-methylpropane-1-one, 4-(2-hydroxyethoxyphenyl)-2-hydroxy-2-methylpropane-1-one, 1-hydroxycyclohexylphenylketone, di-ethoxyacetophenone, p-tert butyltrichloroacetophenone, an alkylphenylglyoxylate, camphorquinone or a camphorquinone derivative.

## Patentansprüche

1. Photopolymerisierbarer Klebstoff, welcher im wesentlichen besteht aus:
mindestens einer Verbindung (1), welche aus mindestens einer Vinylgruppe und/oder einer (Meth)acryloxygruppe als eine polymerisierbare Gruppe und anderen molekularen Struktureinheiten in ihrem Molekül besteht, die aus gesättigten Kohlenwasserstoffen, Ethern gesättigter Kohlenwasserstoffe, Dialkylsiloxanen und Derivaten davon aufgebaut sind, die gegebenenfalls mit Fluoratomen, Hydroxygruppen oder Alkoxygruppen substituiert sein können;
3 bis 60 Gew.-% mindestens einer Verbindung (2), die aus der nachstehenden Gruppe A ausgewählt ist; und
0,1 bis 2 Gew.-% mindestens einer Verbindung (3), die aus der nachstehenden Gruppe B ausgewählt ist;
Gruppe A: (Meth)acrylsäure, Hydroxyalkyl(meth)acrylat, (Meth)acryloxyalkylbernsteinsäure, Trialkoxyvinylsilan und γ-(Meth)acryloxyalkyltrialkoxysilan;
Gruppe B: Hydroxyacetophenone, Acetophenone, Glyoxylester und Campherchinone.

2. Klebstoff gemäß Anspruch 1, worin die Verbindung (2) in einer Menge von 10 bis 30 Gew.-% vorhanden ist.

3. Klebstoff gemäß Anspruch 1, worin die Verbindung (1) ein Alkandioldi(meth)acrylat,
Cycloalkandioldi(meth)acrylat,
Alkylenglycoldi(meth)acrylat,
Glycerindi(meth)acrylat,
Trimethylolpropan-modifiziertes Di(meth)acrylat,
Pentaerythritolpoly(meth)acrylat,
Bis[(meth)acryloxyalkyl]dimethylsiloxan,
Bis[(meth)acryloxyalkyl]fluoralkylsiloxan,,
Bis[(meth)acryloxyalkyl]fluoralkan,
Alkyl(meth)acrylat,
Alkylenglycol(meth)acrylat,
Glycidyl(meth)acrylat,
Fluoralkyl(meth)acrylat,
Fluoralkyloxyalkylenglycol(meth)acrylat,
Fluoralkyloxyhydroxypropyl(meth)acrylat,
Siloxanyl(meth)acrylat,
Fluoralkylsiloxanyl(meth)acrylat oder
Hydroxyalkyl(meth)acrylat ist.

4. Klebstoff gemäß Anspruch 1, worin die Verbindung (1) in einer Menge von 70 bis 90 Gew.-% vorhanden ist.

5. Klebstoff gemäß Anspruch 1, worin die Verbindung (2) (Meth)acrylsäure,
(Meth)acryloxyethylbernsteinsäure,
(Meth)acryloxypropylbernsteinsäure,
(Meth)acryloxybutylbernsteinsäure,
2-Hydroxyethyl(meth)acrylat,,
2-Hydroxypropyl(meth)acrylat,
Butandiolmono(meth)acrylat,
Polyethylenglycolmono(meth)acrylat,
Polypropylenglycolmono(meth)acrylat oder
Polyethylenglycol/Polypropylenglycolmono(meth)acrylat ist.

6. Klebstoff gemäß Anspruch 1, worin die Verbindung (3) 1-Phenyl-2-hydroxy-2-methylpropan-1-on, 1-(3,4-Dimethylphenyl)-2-hydroxy-2-methylpropan-1-on, 1-(4-Isopropylphenyl)-2-hydroxy-2-methylpropan-1-on, 1-(4-t-Butylphenyl)-2-hydroxy-2-methylpropan-1-on, 4-(2-Hydroxyethoxyphenyl)-2-hydroxy-2-methylpropan-1-on, 1-Hydroxycyclohexylphenylketon, Diethoxyacetophenon, p-t-Butyltrichloracetophenon, ein Alkylphenylglyoxylat, Campherchinon oder ein Campherchinonderivat ist.

## Revendications

1. Adhésif photopolymérisable consistant essentiellement en :
au moins un composé (1) qui est constitué d'au moins un groupe vinyle et/ou un groupe (méth)acryloxy comme un groupe polymérisable dans sa molécule et d'autres moitiés structurelles moléculaires construites à partir d'hydrocarbures saturés, d'éthers d'hydrocarbures saturés, de dialkylsiloxanes et de dérivés de ceux-ci qui peuvent être facultativement substituées par des atomes de fluor, des groupes hydroxy ou des groupes alcoxy ; de 3 à 60 % en poids d'au moins un composé (2) choisi dans le groupe A suivant ; et de 0,1 à 2 % en poids d'au moins un composé (3) choisi dans le groupe B suivant
groupe A : acide (méth)acrylique, (méth)acrylate d'hydroxyalkyle, acide (méth)acryloxyalkylsuccinique, trialcoxyvinylsilane et γ-(méth)acryloxyalkyl-trialcoxysilane;
groupe B : hydroxyacétophénones, acétophénones, glyoxyesters, et camphorquinones.

2. Adhésif selon la revendication 1 dans lequel le composé (2) est présent dans une quantité de 10 à 30 % en poids.

3. Adhésif selon la revendication 1 dans lequel le composé (1) est un di(méth)acrylate d'alcanediol, un di(méth)acrylate de cycloalcanediol, un di(méth)acrylate d'alkylèneglycol, un di(méth)acrylate de glycérol, un di(méth)acrylate modifié au triméthylolpropane, un poly(méth)acrylate de pentaérythrytol, un bis[(méth)acryloxyalkyl]diméthylsiloxane, un bis[(méth)acryloxyalkyl]fluoro-alkylsiloxane, des bis[(méth)acryloxyalkyl]fluoroalcanes, un (méth)acrylate d'alkyle, un (méth)acrylate d'alkylèneglycol, un (méth)acrylate de glycidyle, un (méth)acrylate de fluoroalkyle, un (méth)acrylate de fluoroalkyloxyalkylèneglycol, un (méth)acrylate de fluoroalkyloxyhydroxypropyle, un (méth)acrylate de siloxanyle, un (méth)acrylate de fluoroalkylsiloxanyle ou un (méth)acrylate d'hydroxyalkyle.

4. Adhésif selon la revendication 1 dans lequel le composé (1) est présent dans une quantité de 70 à 90 % en poids.

5. Adhésif selon la revendication 1 dans lequel le composé (2) est l'acide (méth)acrylique, l'acide (méth)acryloxyéthylsuccinique, l'acide (méth)acryloxypropylsuccinique, l'acide (méth)acryloxybutylsuccinique, le (méth)acrylate de 2-hydroxyéthyle, le (méth)acrylate de 2-hydroxypropyle, le mono(méth)acrylate de butanediol, le mono(méth)acrylate de polyéthylèneglycol, le mono(méth)acrylate de polypropylèneglycol ou le mono(méth)acrylate de polyéthylèneglycol/polypropylèneglycol.

6. Adhésif selon la revendication 1 dans lequel le composé (3) est la 1-phényl-2-hydroxy-2-méthylpropane-1-one, la 1-(3,4-diméthylphényl)-2-hydroxy-2-méthylpropane-1-one, la 1-(4-isopropylphényl)-2-hydroxy-2-méthylpropane-1-one, la 1-(4-tert.butylphényl)-2-hydroxy-2-méthylpropane-1-one, la 4-(2-hydroxyéthoxyphényl)-2-hydroxy-2-méthylpropane-1-one, la 1-hydroxycyclohexylphénylcétone, la di-éthoxyacétophénone, la p-tert.butyltrichloroacétophénone, un glyoxylate d'alkylphényle, une camphorquinone ou un dérivé de camphorquinone.
